# FASCICULE DE BREVET EUROPEEN

(11) **EP 3 599 878 B1**
(45) Date de publication et mention de la délivrance du brevet: **31.01.2024**
(21) Numéro de dépôt: 18713971.2
(22) Date de dépôt: 30.03.2018
(51) Int. Cl.: A23G 3/34, A23G 3/42, A23G 3/54, A23G 4/10, A23G 4/20

(54) **MÉTHODE D'ENROBAGE TENDRE SANS SUCRES D'UN CENTRE DE CONFISERIE**
VERFAHREN ZUR ZUCKERFREIEN WEICHEN BESCHICHTUNG DER MITTE EINER SÜSSWARE
METHOD FOR SOFT COATING WITHOUT SUGARS OF A CONFECTIONERY CENTRE

(30) Priorité: 31.03.2017 FR 1700352
(43) Date de publication de la demande: 05.02.2020
(73) Titulaire: Tereos Starch & Sweeteners Belgium, 9300 Aalst (BE)
(72) Inventeur: CAMUEL, Nadia, 67390 Marckolsheim (FR)
(74) Mandataire: Icosa
(86) Numéro de dépôt international: PCT/EP2018/058341
(87) Numéro de publication internationale: WO 2018/178360

(56) Documents cités:
- EP-A1- 0 625 311
- EP-A1- 1 481 597
- EP-A1- 2 108 264
- FR-A1- 2 883 453
- GB-A- 2 079 129
- US-A1- 2006 257 551
- US-A1- 2008 063 747

## Description

### DOMAINE DE L'INVENTION

La présente invention concerne une méthode d'enrobage tendre sans sucres d'un centre de confiserie ainsi que la confiserie ainsi obtenue.

### ÉTAT DE LA TECHNIQUE

Les enrobages tendres des confiseries de type gomme, gélifié, chocolat ou réglisse s'effectuent à partir de sirop de glucose et de sucre. Des confiseries à enrobage tendre sans sucres ne sont actuellement pas retrouvées sur le marché.

EP 2 108 264 A1 divulgue un procédé de dragéification dure sans sucre, permettant la création d'un revêtement dur à la surface d'un noyau en moins de deux heures, et comportant une pluralité de cycles comprenant chacun les étapes suivantes : - (a) une étape d'application d'un sirop de dragéification contenant au moins un polyol, ledit polyol étant obtenu par hydrogénation de disaccharides, et ledit sirop de dragéification ayant une teneur en matières sèches entre 60 et 90% en poids, de préférence entre 70 et 85% en poids ; - (b) une étape de séchage comprenant l'utilisation d'un air à une température comprise entre 40°C et 70°C, pendant une durée d'au moins 1 minute et au plus de 5 minutes ; le nombre de cycles étant tel que l'on obtienne un taux de grossissage supérieur à 25%, préférentiellement supérieur à 30%, et plus préférentiellement supérieur à 32%.

EP 0 625 311 A1 divulgue un procédé de dragéification dure permettant la création par turbinage d'un revêtement dur à la surface d'un produit et comportant au moins un cycle comprenant :
- une étape d'application d'un sirop composé, par rapport à sa matière sèche soluble, d'au moins 90% en poids d'un polyol choisi parmi le sorbitol, le maltitol, le mannitol, le xylitol, l'érythritol et l'isomalt,
- au moins une étape d'application sous forme pulvérulente d'une poudre d'une pureté supérieure à 95% en poids en ce même polyol ; lesdites étapes d'application étant menées dans un ordre quelconque,
- puis une étape de répartition du sirop et de la poudre appliqués,
caractérisé en ce que ce cycle ne comprend pas d'étape de séchage forcé par un flux d'air.

EP 1 481 597 A1 divulgue un procédé de dragéification dure sans sucre permettant la création d'un revêtement dur à la surface d'un noyau et comportant au moins un cycle comprenant :
une étape d'application d'un sirop de polyol de richesse supérieure à 80%,
une étape de séchage des noyaux,
caractérisé en ce que ce cycle ne comprend pas de temps de pause entre l'étape d'application du sirop de polyol et l'étape de séchage des noyaux.

US 2006/0257551 A1 divulgue une confiserie et un procédé d'enrobage de celle-ci.

Il existe de types d'enrobage de confiseries. L'enrobage dur (dragéification dure) et l'enrobage tendre. En appliquant la dragéification dure, des confiseries dures, croustillantes et opaques sont obtenues.

Contrairement à la dragéification dure, l'enrobage tendre vise l'obtention des confiseries tendres, moelleuses et transparentes.

La dragéification dure d'un noyau nécessite l'application de plusieurs couches successives fines d'un sirop. De manière générale, le procédé de dragéification dure implique le séchage de chaque couche par un flux d'air chaud.

Au contraire, lors de l'enrobage tendre, le taux de matière sèche augmente entre chaque couche par ajout d'agent pulvérulent jusqu'à dissolution de la poudre. Par conséquent, une texture tendre et l'aspect transparent sont obtenus.

L'une des raisons est la difficulté d'obtenir un enrobage tendre d'une qualité, d'une transparence, d'un aspect et d'une texture équivalent à celui obtenu à partir de sucre et de sirop de glucose.

Les principales qualités requises pour un sirop d'enrobage sont ses propriétés anticristallisantes et sa viscosité. En effet, les sirops anticristallisants sous-saturés dissolvent le sucre cristallin grâce au transfert d'eau du sirop vers le sucre, ce qui permet le séchage entre chaque couche d'enrobage tout en conservant une transparence de la couche obtenue. Les propriétés anticristallisantes du sirop ont une incidence sur la texture de l'enrobage tendre et sur le maintien de celle-ci dans le temps. Les propriétés anticristallisantes d'un sirop sont suffisantes lorsque le composé susceptible de cristalliser (tel que le saccharose) est maintenu dans des conditions telles que la cristallisation est inhibée. Les propriétés anticristallisantes du sirop sont liées à deux phénomènes principaux.

D'une part le sirop, selon sa composition, contient une quantité plus ou moins importante de longues chaînes de polysaccharides qui permettent une augmentation de sa viscosité. Une teneur en matière sèche élevée du sirop permet également une augmentation de sa viscosité. Une viscosité suffisamment élevée permet par un phénomène mécanique, la réduction des mouvements des molécules de saccharose et ainsi ralentit la recristallisation.

D'autre part, le sirop contient une composition complexe de sucres de taille et de nature différentes, avec des taux variables de glucose, maltose, saccharose, triose et polysaccharides ; ou de sorbitol, maltitol et autres monomères et polymères hydrogénés. Il ne s'agit pas d'un sirop de saccharose pur. La diversification des sucres permet une limitation du taux de pureté du saccharose (ajouté), ce qui est responsable de la réduction du phénomène de recristallisation.

La viscosité et la composition du sirop sont à adapter en fonction de l'agent pulvérulent ajouté.

La viscosité du sirop d'enrobage détermine la consistance et la texture de l'enrobage final. Par exemple, un sirop de glucose trop visqueux (> 1000 mPa.s à 60°C) ne permet pas une répartition homogène autour des centres de confiserie. Alors qu'un sirop trop peu visqueux (< 110 mPa.s à 60°C) ne permet pas un enrobage de qualité car il génère trop d'agrégats et de paires de centres collés du fait de son fort pouvoir collant. Lors de l'utilisation d'un tel sirop, sa faible viscosité doit être compensée par l'ajout accru de sucre cristallin et l'augmentation du temps d'enrobage/de mise en oeuvre du procédé.

Toutefois, un sirop présentant une viscosité moyenne comparable notamment à celle d'un sirop de glucose comprise entre 110 et 1000mPa.s à 60°C ne suffit pas à la réalisation d'un enrobage tendre de qualité. Les propriétés d'écoulement et d'élasticité du sirop ont également une incidence directe sur la facilité de sa mise en oeuvre ainsi que sur la qualité de l'enrobage obtenu.

Le caractère hygroscopique du sirop utilisé est aussi un facteur limitant dans le processus d'enrobage. L'hygroscopicité est un élément perturbant le procédé d'enrobage car l'absorption d'eau générée du fait de l'hygroscopie du sirop induit des phénomènes de collage dans la turbine. D'autre part une présence élevée de sucres à fort pouvoir hygroscopique induit une reprise en eau accrue au cours de la durée de vie de la confiserie, générant un produit collant voire coulant. Il est donc important de sélectionner un sirop faiblement hygroscopique.

Dans le cas de formulations classiques sucrées, le saccharose, sous sa forme cristallisée est utilisé en tant que charge sucrante pour augmenter le taux de matière sèche du sirop entre deux couches. Sa forme cristalline lui confère des propriétés mécaniques idéales qui permettent un bon roulement des centres de confiseries dans la turbine d'enrobage, en limitant la formation d'agrégats ainsi que le nombre de doubles. La taille des particules de sucre est un élément clé qui détermine la qualité de l'enrobage final. Une taille de particules D(0,5)>400µm améliore la processabilité en limitant significativement la formation d'agrégats. En revanche une D(0,5)>600µm ne permet pas une dissolution totale des particules dans le sirop, ce qui génère des irrégularités de surfaces sur les couches d'enrobage. Par ailleurs une taille de particules plus fine de D(0,5) comprise entre 200 et 400µm se dissout aisément dans le sirop d'enrobage. En revanche l'effet mécanique est moindre, ce qui génère des agrégats et des doubles. Une granulométrie très fine telle avec une taille de particules D(0,5)< 100µm peut même entraver la transparence de l'enrobage.

Ainsi, afin de mettre en place un enrobage tendre sans sucres, il s'agira de déterminer la ou les tailles de particules idéales, en adéquation avec le taux de solubilité, les propriétés mécaniques ainsi que l'hygroscopicité des molécules choisies afin d'obtenir un enrobage tendre transparent, facile à obtenir et stable dans le temps.

En outre, la combinaison entre le sirop utilisé, la nature et la granulométrie de l'agent pulvérulent ajouté lors de l'enrobage détermineront le caractère translucide de l'enrobage obtenu.

La présente invention propose une méthode permettant d'obtenir des confiseries comprenant des enrobages sans sucres tendres stables dans le temps, de texture tendre et présentant un aspect comparable à celui d'un enrobage tendre sucré.

La présente invention permet également de proposer une méthode utilisant les mêmes équipements que les équipements classiquement utilisés pour l'enrobage au sucre.

### RÉSUMÉ

La présente invention concerne une méthode d'enrobage tendre d'un centre de confiserie comprenant :
a. la fourniture d'un noyau de confiserie ;
b. optionnellement, une étape de gommage, typiquement, ladite étape de gommage est suivie d'une étape de séchage (statique étuve) ;
c. une étape d'enrobage par :
   i. l'application d'au moins un premier sirop de sucre-alcool présentant une viscosité à 60°C au rhéomètre comprise entre 1600mPa.s et 120mPa.s, et/ou une matière sèche comprise entre 70 et 87% (masse/masse) ;
   ii. l'application d'une première composition pulvérulente de sucre-alcool comprenant une granulométrie moyenne D(0,5) inférieure à 600µm ;
   iii. l'application d'une deuxième composition pulvérulente de sucre-alcool comprenant une granulométrie moyenne D(0,5) inférieure à 500µm ;
   iv. les étapes c.i), c.ii) et/ou c.iii) sont répétées préférentiellement, au moins quatre fois consécutives ;
d. une étape de finition de l'enrobage par :
   i) l'application d'au moins un deuxième sirop de sucre-alcool présentant une viscosité au rhéomètre comprise entre 20mPa.s et 50mPa.s, et/ou une matière sèche comprise entre 50 et 70% (masse/masse) ;
   ii) l'application de la première et/ou de la seconde composition pulvérulente de sucre-alcool ;
   iii) optionnellement, les étapes d.i) et d.ii) répétées au moins une fois ;
e. optionnellement, une étape de polissage et/ou d'application d'agent de brillance ;
f. optionnellement, une étape d'application d'un agent de scellage.

Dans un mode de réalisation, le premier et/ou le second sirop de sucre-alcool est un sirop de polyglycitols ou un sirop d'hydrolysat d'amidon hydrogéné ou un sirop de maltitol, de sorbitol, de xylitol, d'érythritol ou de mannitol.

De préférence, le premier et/ou le second sirop de sucre-alcool est un sirop de maltitol comprenant plus de 50% de maltitol, moins de 8% de sorbitol et moins de 45%de DP3+ hydrogénés.

Dans un mode de réalisation, le premier sirop de sucre-alcool présente une viscosité à 60°C au rhéomètre comprise entre 120mPa.s et 1600mPa.s.

Dans un mode de réalisation, le premier sirop de sucre-alcool peut être obtenu par hydrogénation d'un sirop de glucose ayant un dextrose équivalent compris entre 38 et 60.

Dans un mode de réalisation, la première composition pulvérulente de sucre-alcool présente une granulométrie moyenne comprise entre 180-600µm et/ou la seconde composition pulvérulente de sucre-alcool présente une granulométrie moyenne comprise entre de 25 et 60µm.

Dans un mode de réalisation, la première et/ou la seconde composition pulvérulente de sucre-alcool est une composition pulvérulente de maltitol, de mannitol, de sorbitol, d'érythritol, d'isomalt, de polyglycitol, d'hydrolysat d'amidon hydrogéné ou d'un mélange de ceux-ci.

Dans un mode de réalisation particulier, lorsque le premier sirop de sucre-alcool est un sirop de maltitol, la première et/ou la seconde composition pulvérulente de sucre-alcool est choisie parmi le sorbitol, le maltitol, l'érythritol ou leurs mélanges.

La présente invention concerne également une confiserie directement obtenue selon la méthode de l'invention, caractérisée en ce que l'enrobage est tendre et sans sucres.

Dans un mode de réalisation, le centre de cette confiserie est choisi parmi les gommes, les chocolats, et les centres comprenant de la gélatine et/ou de la réglisse.

### DESCRIPTION DÉTAILLÉE

La présente invention concerne une méthode d'enrobage, de préférence enrobage tendre, de centre de confiserie comprenant :
a. la fourniture d'un noyau de confiserie ;
b. optionnellement, une étape de gommage, typiquement, ladite étape de gommage est suivie d'une étape de séchage (statique étuve) ;
c. une étape d'enrobage par :
   i. l'application d'au moins un premier sirop du sucre alcool présentant une viscosité à 60°C au rhéomètre comprise entre 1600mPa.s et 120mPa.s, et/ou une matière sèche comprise entre 70 et 87% (masse/masse) ;
   ii. l'application d'une première composition pulvérulente de sucre-alcool comprenant une granulométrie moyenne D(0,5) inférieure à 600µm ;
   iii. l'application d'une deuxième composition pulvérulente de sucre-alcool comprenant une granulométrie moyenne D(0,5) inférieure à 500µm ;
   iv. les étapes c.i), c.ii) et/ou c.iii) sont répétées préférentiellement, au moins quatre fois consécutives ;
d. une étape de finition de l'enrobage par :
   i) l'application d'au moins un deuxième sirop de sucre alcool présentant une viscosité au rhéomètre comprise entre 20mPa.s et 50mPa.s, et/ou une matière sèche comprise entre 50 et 70% (masse/masse) ;
   ii) l'application de la première et/ou de la seconde composition pulvérulente de sucre-alcool ;
   iii) optionnellement, les étapes d.i) et d.ii) répétées au moins une fois ;
e. optionnellement, une étape de polissage et/ou d'application d'agent de brillance ;
f. optionnellement, une étape d'application d'un agent de scellage.

Dans un mode de réalisation, les étapes c.i), c.ii) et/ou c.iii) sont répétées, préférentiellement au moins cinq fois consécutives.

Dans un mode de réalisation, les étapes c.i), c.ii) et/ou c.iii) sont répétées, préférentiellement au moins six ou au moins sept fois consécutives.

Typiquement, la couche de gommage est obtenue par la mise en oeuvre d'une solution de gommage comprenant, préférentiellement, une gomme naturelle ou synthétique, préférentiellement choisie parmi la gomme arabique, une combinaison saccharose et de gomme arabique ou d'un autre hydrocolloïde.

Lorsque l'agent de gommage est la gomme arabique, la gomme arabique choisie peut être la SPRAYCOAT S^{®} commercialisée par la société Nexira.

L'avantage de l'étape de gommage est la prévention des phénomènes de migration d'eau et ou de matière grasse (interactions hydrophiles/hydrophobes), l'amélioration de l'adhésion de l'enrobage sur les noyaux et l'élimination des éventuels défauts de surface du noyau de confiserie.

Typiquement, la solution de gommage contient entre 40% à 70% en masse d'agent de gommage, préférentiellement 50%.

Selon l'invention, par sirop de sucre-alcool, on entend un sirop contenant un sucre-alcool ou un mélange de sucre-alcools.

Par « sucre-alcool », on entend au sens de la présente invention, tout dérivé hydrogéné de composés saccharidiques renfermant au moins une fonction réductrice. Chaque fonction réductrice de ces sucres est transformée en une fonction alcool par hydrogénation, selon des procédés appropriés et connus en eux-mêmes de l'homme du métier. Typiquement, le sucre-alcool est choisi parmi le maltitol, le sorbitol, le xylitol, l'érythritol, le mannitol et leurs combinaisons.

Dans un mode de réalisation, le sucre-alcool est choisi parmi le maltitol, le sorbitol, le l'érythritol, le mannitol et leurs combinaisons.

Préférablement, le sucre-alcool est choisi parmi le maltitol, le sorbitol, l'érythritol et leurs combinaisons.

Selon une première variante de l'invention, le premier et/ou le second sirop de sucre-alcool est un sirop de polyglycitols ou un sirop d'hydrolysat d'amidon hydrogéné.

Selon l'invention par « hydrolysat d'amidon hydrogéné », on entend un sirop obtenu à partir de l'hydrolyse d'un lait d'amidon suivi d'une étape d'hydrogénation de l'amidon hydrolysé obtenu. Les méthodes d'hydrogénation d'hydrolysats d'amidon sont largement décrites et bien connues de l'homme du métier.

Par DP1, DP2, DP3 ou DP4, on entend un composé issu de l'hydrolyse de l'amidon et comprenant un degré de polymérisation respectivement de 1, 2, 3 ou 4. DP4+ ou DP3+ se réfèrent à des composés comprenant respectivement un degré de polymérisation égal ou supérieur à 4 ou 3.

Typiquement, ledit sirop d'hydrolysat d'amidon hydrogéné comprend en matière sèche, entre 25 et 85% de DP1 et DP2 hydrogénés et entre 2 à 45% DP3+ hydrogénés, préférentiellement, entre 30 et 65% de DP1 et DP2 hydrogénés et de 15 à 60% DP3+ hydrogénés. Avantageusement, ledit sirop comprend, 1 à 20% en masse de DP1 hydrogénés et 15 à 60% en masse de DP2 hydrogénés.

La détermination de la répartition des DP1 à DP4+ est obtenue par chromatographie HPLC selon des conditions bien connues de l'homme du métier, suivant la méthode AOAC-Official Methods of Analysis (1990) - ref. 979-23.

La teneur en DP4+ hydrogénés est comprise entre 10 et 50%, préférentiellement entre 18 et 40%. Typiquement ledit sirop d'hydrolysat d'amidon hydrogéné contient 1 à 10% de polymères hydrogénés de masse moléculaire comprise entre 10 et 20 kDa.

La caractérisation des polymères hydrogénés selon l'invention a été effectuée par la technique de chromatographie d'exclusion stérique. La chromatographie d'exclusion stérique (CES) est une technique de chromatographie liquide qui permet de déterminer la distribution en poids moléculaire des polymères. Le phénomène physique permettant la séparation des différentes macromolécules est basé sur le volume hydrodynamique des macromolécules. Les molécules (élution/éluées) peuvent ou non pénétrer dans les colonnes constituées de billes poreuses et ainsi, les molécules les plus petites sont retenues alors que les plus grosses éluent plus rapidement. L'équipement comprend trois colonnes branchées en série, combinées à deux détecteurs couplés. En sortie de colonnes, un détecteur à indice de réfraction R.I. fournit la concentration et un détecteur laser (Diffusion De Lumière, 3 angles) fournit la taille des macromolécules sortant des colonnes à un instant donné. Les mesures sont effectuées en suivant les recommandations du constructeur.

Par « polyglycitol » on entend un hydrolysat d'amidon hydrogéné comprenant un mélange de sucre-alcools comprenant du maltitol, du sorbitol, dans une moindre quantité des oligo- et des polysaccharides hydrogénés ainsi que du maltrotriitol. On parle également de « polyglucitol ».

Selon une seconde variante de l'invention, le sirop de sucre-alcool est un sirop de sucre alcool présentant une teneur en ce sucre-alcool (DP1ol ou DP2ol) supérieur à 50% et typiquement, inférieure à 85%, préférablement inférieur à 75% et plus préférablement inférieure à 60%.

Avantageusement, le premier et/ou le second sirop de sucre-alcool est un sirop de maltitol, de sorbitol, de xylitol, d'érythritol ou de mannitol. Préférentiellement, le premier et/ou le second sirop de sucre-alcool est un sirop de maltitol comprenant plus de 50% de maltitol, moins de 8% de sorbitol et moins de 45%de DP3+ hydrogénés.

Les inventeurs ont constaté qu'un taux limité en DP1-ol et DP2-ol tel que dans le sirop de maltitol, combiné avec la présence de polysaccharides hydrogénés (DP3+ol) procurent les propriétés de viscosités, d'élasticité et d'écoulement qui permettent une répartition homogène du sirop autour des noyaux tout en limitant l'hygroscopicité. Dans le cas du sirop de maltitol, un taux de maltitol élevé (supérieur à 50%) dans le sirop engendre un pouvoir sucrant élevé et suffisant pour le support aromatique qui permet la production de l'enrobage tendre sans utilisation d'édulcorant intense.

Le premier sirop de sucre-alcool présente une viscosité à 60°C au rhéomètre comprise entre 120mPa.s et 1600mPa.s, préférentiellement entre 115mPa.s et 1580mPa.s ; et/ou une matière sèche comprise entre 70 et 87% (masse/masse), préférentiellement entre 72 et 85% en poids.

Par « viscosité » selon l'invention on entend une mesure de viscosité à 60°C réalisée sur un équipement Rhéomètre Anton Paar, modèle MCR 102 en suivant les recommandations du constructeur.

Le premier sirop de sucre-alcool peut être obtenu par hydrogénation d'un sirop de glucose ayant un dextrose équivalent compris entre 38 et 60.

Par dextrose équivalent, on entend la mesure du pouvoir réducteur d'une composition. Le « dextrose équivalent » (DE) exprime le niveau d'hydrolyse de l'amidon. Le DE est défini comme étant le nombre de grammes de sucres réducteurs exprimés en glucose pour 100 grammes de substance sèche. Il est mesuré par la méthode de Lane et Eynon (Lane, J.H., Eynon, L. (1923). Détermination of reducing sugars by means of Fehling's solution with methylene blue as internai indicator. J. Soc. Chem. Ind. Trans. 32-36.). Le DE du glucose est égal par définition à 100, celui des sirops de glucose est compris entre 99 et 20 et celui des maltodextrines est toujours inférieur à 20. D'autres agents sucrants peuvent être ajoutés aux sirops ou aux compositions pulvérulentes utilisées dans la présente invention tels que notamment des édulcorants intenses, des extraits de stévia (glycosides de stéviol), du sucralose, l'aspartame, l'acésulfame K. Avantageusement, les édulcorants intenses sont dissous dans le sirop d'enrobage dès la préparation, en appliquant des taux d'incorporation en relation avec leurs pouvoirs sucrants respectifs (et la réglementation en vigueur). Lesdites compositions pulvérulentes de sucre-alcools pouvant être cristallines ou non. Ces dernières sont typiquement, obtenues par atomisation de sirop d'hydrolysat d'amidon hydrogéné ou de sirop de sucres-alcool.

Il a été mis en évidence que les compositions pulvérulentes de sucre-alcool, plus particulièrement la première composition pulvérulente de sucre-alcool permettant d'obtenir l'enrobage de meilleur aspect et texture présentait une granulométrie moyenne D(0,5) comprise entre 20µm à 600µm, préférentiellement entre 25µm à 500µm, et plus préférentiellement entre 30µm à 300µm.

Dans un mode de réalisation, la première composition pulvérulente de sucre-alcool permettant d'obtenir l'enrobage de meilleur aspect et texture présentait une granulométrie moyenne D(0,5) comprise entre 45µm à 600µm, préférentiellement entre 45µm à 500µm et plus préférentiellement entre 30µm à 300µm. Dans un mode de réalisation, la première composition pulvérulente de sucre-alcool permettant d'obtenir l'enrobage tendre de meilleur aspect et texture présentait une granulométrie moyenne D(0,5) comprise entre 45µm à 400µm, préférentiellement entre 45µm à 400µm, et plus préférentiellement entre 45µm à 300µm. Dans un mode de réalisation, la première composition pulvérulente de sucre-alcool permettant d'obtenir l'enrobage tendre de meilleur aspect et texture présentait une granulométrie moyenne D(0,5) comprise entre 45µm à 250 µm, préférentiellement entre 45µm à 245µm, et plus préférentiellement entre 45µm à 245µm.

Dans un mode de réalisation, la seconde composition pulvérulente de sucre-alcool permettant d'obtenir l'enrobage tendre de meilleur aspect et texture présente une granulométrie moyenne D(0,5) comprise entre 25µm à 500µm, et plus préférentiellement entre 30µm à 300µm. Selon l'invention, par distribution granulométrique moyenne ou D(v.0.5) on entend la valeur de la taille de particule pour laquelle 50% (en volume) de la poudre a une taille inférieure.

Dans un mode de réalisation, la seconde composition pulvérulente de sucre-alcool permettant d'obtenir l'enrobage tendre de meilleur aspect et texture présentait une granulométrie moyenne D(0,5) comprise entre 45µm à 500µm, préférentiellement entre 30µm à 300µm. Dans un mode de réalisation, la seconde composition pulvérulente de sucre-alcool permettant d'obtenir l'enrobage tendre de meilleur aspect et texture présentait une granulométrie moyenne D(0,5) comprise entre 45µm à 400µm, préférentiellement entre 45µm à 400µm, et plus préférentiellement entre 45µm à 300µm.

Dans un mode de réalisation, la seconde composition pulvérulente de sucre-alcool permettant d'obtenir l'enrobage tendre de meilleur aspect et texture présentait une granulométrie moyenne D(0,5) comprise entre 45µm à 250 µm, préférentiellement entre 45µm à 245µm, et plus préférentiellement entre 45µm à 245µm.

L'analyse des particules est effectuée par granulométrie laser, conformément à la méthode décrite dans la Pharmacopée Européenne 6.0 N° 01/2008 :20931 p.311. Par exemple en utilisant un appareil de Type Mastersizer (Model : MALVERN Mastersizer 2000). Afin d'avoir les résultats les plus fiables possible, une dispersion préalable de la poudre dans un solvant approprié qui ne provoque ni la dissolution des particules ni leur agglomération est recommandée. A titre d'exemple, une huile de tournesol ne contenant aucune trace d'eau peut être utilisée.

Typiquement, la première et/ou la seconde composition pulvérulente de sucre-alcool est une composition pulvérulente de maltitol, mannitol, sorbitol, d'érythritol, d'isomalt, les polyglycitols, les hydrolysats d'amidon hydrogénés ou d'un mélange de ceux-ci.

Le maltitol pulvérulent est particulièrement adapté du fait de ses faibles propriétés hygroscopiques. D'autres agents pulvérulents de faible hygroscopicité tels que le mannitol, le sorbitol, l'erythritol ou l'isomalt peuvent être employés. Le xylitol pulvérulent ne sera pas un bon candidat à cause de son caractère hygroscopique trop élevé.

L'étape de finition comprend la formation d'une couche de finissage par l'application d'un second sirop de sucre-alcool (sirop de finissage). Typiquement, le second sirop de sucre-alcool est un sirop de sucre-alcool au sens de l'invention.

Le second sirop de sucre-alcool présente une viscosité à 60°C au rhéomètre comprise entre 20mPa.s et 50mPa.s, préférentiellement entre 25mPa.s et 50mPa.s ; et/ou une matière sèche inférieure au premier sirop de sucre-alcool, typiquement comprise entre 50 et 70% (masse/masse) préférentiellement, entre 60 et 70% en poids.

Typiquement, la première et/ou la seconde composition pulvérulente de sucre-alcool est choisie parmi le maltitol, l'isomalt, le sorbitol, le xylitol, l'érythritol, le mannitol, les polyglycitols, les hydrolysats d'amidon hydrogénés et leurs combinaisons. Préférentiellement, la première et/ou la seconde composition pulvérulente de sucre-alcool est choisie parmi le maltitol, le sorbitol, le l'érythritol, et leurs combinaisons.

Dans un mode de réalisation, la première et/ou la seconde composition pulvérulente de sucre-alcool est choisie parmi le maltitol, l'isomalt, le sorbitol, l'érythritol, le mannitol, les polyglycitols, les hydrolysats d'amidon hydrogénés et leurs combinaisons. Préférentiellement, la première et/ou la seconde composition pulvérulente de sucre-alcool est choisie parmi le maltitol, le sorbitol, et leurs combinaisons.

Avantageusement, la première et/ou la seconde composition pulvérulente de sucre-alcool est un mélange de sucre-alcool.

Selon un mode de réalisation particulièrement avantageux, la première composition pulvérulente et la seconde composition pulvérulente présentent des granulométries moyennes différentes.

Typiquement, la première composition pulvérulente de sucre-alcool présente une granulométrie moyenne comprise entre 180-600µm et/ou la seconde composition pulvérulente de sucre-alcool présente une granulométrie moyenne comprise entre de 25 et 60µm.

Dans un mode de réalisation, la première composition pulvérulente de sucre-alcool présente une granulométrie moyenne comprise entre 260-600µm et/ou la seconde composition pulvérulente de sucre-alcool présente une granulométrie moyenne comprise entre de 35 et 60µm.

Dans un mode de réalisation, la première composition pulvérulente de sucre-alcool présente une granulométrie moyenne comprise entre 300-600µm et/ou la seconde composition pulvérulente de sucre-alcool présente une granulométrie moyenne comprise entre de 45 et 60µm.

Avantageusement, lorsque le premier sirop de sucre-alcool est un sirop de maltitol, la première et/ou la seconde composition pulvérulente de sucre-alcool est choisie parmi le sorbitol, le maltitol, l'érythritol ou leurs mélanges.

La méthode selon l'invention prévoit également une étape de polissage et/ou d'application d'agent de brillance des centres de confiserie une fois enrobés. Typiquement, une telle étape est précédée d'une étape de maturation/séchage statique des centres enrobés pendant une période de 12 à 48h. Ladite étape de polissage est préférentiellement effectuée par l'application d'agent de polissage et de brillance typiquement des cires naturelles ou synthétiques du type cire de carnauba micronisée comme par exemple le Pan Oil Leader CWM commercialisé par Stéarinerie Dubois.

Un agent de scellage peut être appliqué en ultime étape de manière à protéger l'enrobage tendre pendant toute la durée de vie de la confiserie. L'étape de scellage fixe le polissage et protège la brillance des influences extérieures telles que l'humidité ou les poussières. L'agent de scellage comme par exemple le Pan Oil Leader GL9001 commercialisé par Stéarinerie Dubois contient typiquement une gomme laque combinée à des huiles végétales et de l'alcool alimentaire.

Selon l'invention, le centre de confiserie peut comprendre toute composition de confiserie appropriée. Le terme « composition de confiserie » désigne un produit comestible comprenant un composant sucré. Les compositions de confiserie comprennent des préparations faites avec du sucre, du sirop de glucose, des sucre-alcools, des polyglycitols, du polydextrose ou du miel, et des aliments de goût sucré tels que des bonbons. Des compositions de confiserie appropriées sont bien connues dans l'état de l'art et comprennent des bonbons tendres tels que des gélifiés à base de gélatine et/ou de pectine, des gommes, des gommes à mâcher, des confiseries extrudées « liquorices », du chocolat (y compris, par exemple, du chocolat au lait, du chocolat noir, du chocolat), des pastilles, etc. La limitation technique est la résistance à la chaleur des noyaux à enrober ainsi que la résistance au stress mécanique (phénomène/risque d'écrasement dans la turbine). Les noyaux à enrober ne doivent pas être déformés par l'action mécanique des noyaux en mouvement dans la turbine ni par la chaleur apportée par le sirop d'enrobage tendre. Typiquement, le centre est choisi parmi les gommes, les chocolats, et les centres comprenant de la gélatine et/ou de la réglisse.

La taille et la forme des noyaux peuvent varier, couvrant des formes de boules, des dragées, des pastilles, des formes ovoïdes, *etc*., et des diamètres allant jusqu'à 30 mm, typiquement entre 10 et 12 mm.

En fonction du centre de confiserie choisi, les quantités de sirop d'enrobage tendre et d'agent pulvérulent doivent être adaptés en ligne avec la surface spécifique des noyaux considérés.

Un enrobage dur, connu par l'homme de métier, peut également être appliqué au-dessus de l'enrobage tendre de manière facultative. Dans ce cas l'agent de polissage et l'agent de scellage sont ajoutés après l'étape d'enrobage dur.

Typiquement, le procédé d'enrobage selon l'invention peut être mis en oeuvre dans une turbine d'enrobage. Les centres à enrober étant sensibles au stress mécanique exercé lors de l'enrobage, le mode d'enrobage en turbine, notamment sur les turbines en forme de poire, permet de limiter le stress mécanique. L'équipement Dumoulin est particulièrement adapté pour un tel procédé.

En outre des équipements d'enrobage automatisés tels que commercialisés par la société Driam permet également l'enrobage tendre et pourrait convenir pour la production d'un enrobage tendre sans sucres. Le tambour d'enrobage n'est alors pas perforé et un système d'alimentation des centres très doux est aménagé.

Bien qu'ayant des significations distinctes, les termes « comprenant », « contenant », « comportant » et « consistant en » ont été utilisés de manière interchangeable dans la description de l'invention, et peuvent être remplacés l'un par l'autre.

### EXEMPLES

La présente invention se comprendra mieux à la lecture des exemples suivants qui illustrent non-limitativement l'invention.

### Exemple 1 :

Une confiserie enrobée avec une formulation à partir de sucre et de sirop de glucose a été obtenue et utilisée dans les exemples suivants au titre de comparatif de l'enrobage tendre sucré de l'art antérieur.

Un sirop de glucose standard de dextrose équivalent 42 (MYLOSE^{®} commercialisé par la demanderesse) est sélectionné à 72 brix, pour une viscosité de 145 mPa.s à 60°C, et employé comme sirop d'enrobage pour les premières couches (sirop 1).

Un sirop de glucose standard de dextrose équivalent 42 (MYLOSE^{®} commercialisé par la demanderesse) est dilué à 67 brix, d'une viscosité de 62 mPa.s à 60°C, et est employé comme sirop d'enrobage pour la finition (sirop 2).

Une combinaison de deux agents pulvérulents est employée comme agent de charge entre deux couches de sirop. Un sucre saccharose de D(0,5) 475µm (Sucre n°1) est utilisé pour permettre une bonne rotation des centres et éviter les doubles et agrégats. Un sucre cristallisé de D(0,5) de 270µm (Sucre n°2) est utilisé comme agent de charge pour augmenter le taux de matière sèche. La mesure de la granulométrie moyenne D(0,5) est évaluée par diffraction laser - Malvern Mastersizer 2000.

Le protocole d'enrobage tendre complet est décrit dans le tableau 1 ci-dessous.

Le poids moyen des centres de confiserie à enrober est de 1,3g +/- 5% suivant une forme ovoïde de diamètre compris entre 11 et 12mm.

Les centres sont utilisés préalablement gommés et séchés puis sont enrobés comme suit :

**Tableau 1 : Protocole d'enrobage tendre n°1**

| Couche | Sirop | Volume de sirop (ml) | Sucre n°1 (g) | Sucre n°2 (g) | Temps entre deux couches (min) |
|---|---|---|---|---|---|
| 1 | sirop 1 | 10 | 2 | 15,7 | 15 |
| 2 | sirop 1 | 10 | 2 | 32,3 | 15 |
| 3 | sirop 1 | 10 | 2 | 36,6 | 17 |
| 4 | sirop 1 | 8 | 2 | 34,5 | 15 |
| 5 | sirop 2 | 5 | 0 | 22,5 | 25 |

Ces paramètres permettent d'obtenir de manière aisée un enrobage tendre à partir de sucre notamment grâce à la combinaison des deux grades de sucres cristallisés. Le sirop de glucose à 60°C se répartit autour des noyaux de manière homogène et la texture de l'enrobage tendre reste mou et l'aspect de l'enrobage est transparent. La taille finale du bonbon désiré ainsi que la texture recherchée induisent le nombre de couche d'enrobage à appliquer. Des résultats similaires sont obtenus en l'absence de gommage préalable des centres.

### Exemple 2 :

Plusieurs types de sirops sans sucres ont été testés de manière à obtenir un sirop ayant les propriétés de viscosité nécessaires à la réalisation d'un tel enrobage tendre. La méthode se déroule en sept étapes consécutives : le gommage des centres, le séchage, l'enrobage avec un premier sirop d'une composition A, l'enrobage de finition avec un deuxième sirop d'une composition C, le séchage, la finition avec un agent de brillance et l'agent de scellage.

### Composition des sirops :

Sirop d'enrobage de composition A : Sirop de maltitol à 55% de maltitol et 75° brix viscosité 120mPa.s à 60°C.

Sirop d'enrobage de composition C : Sirop de maltitol à 55% de maltitol et 67° brix viscosité de 28 mPa.s à 60°C.

Plusieurs types de sucre-alcools pulvérulents ont été testés afin d'obtenir une poudre ayant les capacités de solubilité et d'hygroscopicité adéquates telles que décrites précédemment.

Dans l'exemple ci-dessous, un maltitol pulvérulent, agent pulvérulent A de granulométrie moyenne D(0,5) de 40µm est utilisé.

Des essais préalables effectués avec un maltitol pulvérulent, agent pulvérulent B de granulométrie D(0,5) de 610µm ont montré que ce dernier présente des propriétés de roulement intéressantes pour améliorer le roulement des noyaux dans la turbine. Toutefois cette granulométrie est trop grosse et ne permet pas une dissolution des cristaux dans le sirop d'enrobage. L'utilisation d'une telle granulométrie induit un enrobage de très mauvaise qualité et de structure rugueuse.

L'application d'un maltitol pulvérulent C de granulométrie intermédiaire de D(0,5) de 210µm présente des propriétés de roulement intéressantes avec une dissolution limitée dans le sirop d'enrobage. Il a été montré qu'il peut donc être utilisé en faible quantité pour optimiser la processabilité.

Les centres de confiseries sont des confiseries à base d'amidon obtenues selon le procédé décrit dans le brevet WO 2014/181070 A1.

Le poids moyen des centres de confiserie à enrober est de 1,3g +/- 5% suivant une forme ovoïde de diamètre compris entre 11 et 12mm.

600g de centres de confiserie sont introduits dans la turbine d'enrobage et sont traités avec un sirop de gommage. 5g de solution de gommage à 50% (masse/masse) sont injectés à température ambiante dans la turbine à l'aide d'une seringue. Une répartition homogène et un aspect non collant sont obtenus après quelques minutes sans application d'air et avec une rotation de turbine de 23rpm.

Les centres traités sont ensuite séchés pendant 24h minimum dans une étuve régulée à 30°C et 30% d'humidité.

Le protocole d'enrobage tendre complet est décrit dans le tableau 2. Les centres utilisés gommés et séchés préalablement sont enrobés comme suit :

**Tableau 2 : Protocole d'enrobage tendre n°2**

| Couche | Sirop | Volume de sirop (ml) | Quantité d'agent pulvérulent B(g) | Quantité d'agent pulvérulent A (g) | Temps entre deux couches (min) |
|---|---|---|---|---|---|
| 1 | A | 10 | 0 | 30 | 17 |
| 2 | A | 10 | 0 | 41 | 15 |
| 3 | A | 10 | 0 | 48,8 | 15 |
| 4 | A | 8 | 0 | 45,8 | 10 |
| 5 | C | 5 | 0 | 37 | 17 |

Le sirop de maltitol A présente une viscosité proche du sirop de glucose idéal, sa viscosité à 60°c est de 118mPa.s. Toutefois son comportement rhéologique s'avère être significativement différent du sirop sucré, engendrant des phénomènes de collage et d'agrégation de noyaux et rendant l'enrobage significativement plus difficile à maîtriser.

L'ajout de maltitol pulvérulent B de granulométrie D(0,5) de 610µm présente des propriétés de roulement intéressantes pour améliorer le roulement des noyaux dans la turbine. Toutefois, cette granulométrie est trop grosse et ne permet pas une dissolution des cristaux dans le sirop d'enrobage et les cristaux en suspension rendent la surface du noyau irrégulière et la texture en bouche est alors rugueuse. Le Maltilite A a donc été préféré dans cet exemple.

Comparativement à l'enrobage dans l'exemple 1, la proportion d'agent pulvérulent, dans le cas de l'enrobage sans sucres, doit être augmentée significativement pour réduire le collant et permettre le séchage de la couche. Ceci permet de faciliter la mise en oeuvre de l'enrobage mais a pour conséquence de durcir la texture de l'enrobage obtenu et d'induire un risque de recristallisation dans le temps.

Comme précédemment, des résultats similaires ont été obtenus à partir de centres non préalablement gommés, la différence observée est sur la présence de plus de petites imperfections dans l'enrobage.

### Exemple 3 :

Un sirop de maltitol contenant un taux de maltitol de 55% et un taux de matière sèche de 85% (masse/masse) a été préféré à un sirop à base de sucre-alcool pulvérulent.

La méthode se déroule en sept étapes consécutives démarrant avec le gommage des centres, le séchage, l'enrobage avec un premier sirop d'une composition A ou B, l'enrobage avec un deuxième sirop d'une composition C, le séchage, la finition avec un agent de brillance et l'agent de scellage.

### Composition des sirops :

Sirop d'enrobage de composition B : Sirop de maltitol à 55% de maltitol et 85°brix, de viscosité 1540 mPa.s à 60°C.

Sirop d'enrobage de composition C : Sirop de maltitol à 55% de maltitol et 67°brix, de viscosité 28mPa.s à 60°C.

### Compositions pulvérulentes de maltitol :

Maltitol pulvérulent A de taille moyenne D(0,5) de 40µm.
Maltitol pulvérulent B de granulométrie D(0,5) 610µm.
Maltitol pulvérulent C de D(0,5) 210µm.

Les centres de confiseries sont des confiseries à base d'amidon obtenues selon le procédé décrit dans le brevet WO 2014/181070 A1.

Le poids moyen des centres de confiserie à enrober est de 1,3g +/- 5% suivant une forme ovoïde de diamètre compris entre 11 et 12mm.

600g de centres de confiserie sont introduits dans la turbine d'enrobage et sont traités avec un sirop de gommage. 5g de solution de gommage à 50% (masse/masse) sont injectés à température ambiante dans la turbine à l'aide d'une seringue. Une répartition homogène et un aspect non collant sont obtenus après quelques minutes sans application d'air et avec une rotation de turbine de 23rpm.

Les centres traités sont ensuite séchés pendant 24h minimum dans une étuve régulée à 30°C et 30% d'humidité.

Le protocole d'enrobage tendre complet est décrit dans le tableau 3.

Les centres utilisés tels quels ou préférablement gommés et séchés préalablement sont enrobés comme suit :

**Tableau 3 : Protocole d'enrobage tendre n°3**

| Couche | Sirop | Volume de sirop (ml) | Quantité d'agent pulvérulent C(g) | Quantité d'agent pulvérulent A(g) | Temps entre deux couches (min) |
|---|---|---|---|---|---|
| 1 | B | 10 | 2 | 18,3 | 15 |
| 2 | B | 10 | 2 | 24,5 | 10 |
| 3 | B | 10 | 2 | 22 | 10 |
| 4 | B | 10 | 0 | 27,8 | 10 |
| 5 | C | 10 | 0 | 27,2 | 15 |

De manière inattendue, le sirop B qui présente une viscosité 1540mPa.s à 60°C soit dix fois supérieure au sirop sucré adapté à l'enrobage, offre une processabilité proche du sirop sucré classique. Le comportement rhéologique du sirop B permet une répartition homogène autour des noyaux sans effet collant amplifié.

La combinaison de deux maltitols pulvérulents C et A permet d'optimiser le procédé d'enrobage. En effet, en réduisant la proportion de maltitol pulvérulent A, cela permet d'obtenir une texture tendre, proche de la texture d'un enrobage tendre sucré.

Au terme de ces essais il a été possible d'obtenir un enrobage sans sucres ayant les mêmes caractéristiques qu'un enrobage sucré et il a été possible de sélectionner des sirops sans sucres et des agents sucrés pulvérulents susceptibles de permettre l'utilisation de l'ensemble des outils classiquement utilisés pour les enrobages sucrés dans des conditions applicables industriellement avec des rendements comparables à ceux de l'enrobage sucré.

## Revendications

1. Méthode d'enrobage tendre d'un centre de confiserie comprenant :
a. la fourniture d'un noyau de confiserie ;
b. optionnellement, une étape de gommage ;
c. une étape d'enrobage par :
i. l'application d'au moins un premier sirop de sucre-alcool présentant une viscosité à 60°C au rhéomètre comprise entre 1600mPa.s et 120mPa.s, et/ou une matière sèche comprise entre 70 et 87% (masse/masse) ;
ii. l'application d'une première composition pulvérulente de sucre-alcool comprenant une granulométrie moyenne D(0,5) inférieure à 600µm ;
iii. l'application d'une deuxième composition pulvérulente de sucre-alcool comprenant une granulométrie moyenne D(0,5) inférieure à 500µm ;
iv. les étapes c.i), c.ii) et/ou c.iii) sont répétées préférentiellement, au moins quatre fois consécutives ;
d. une étape de finition de l'enrobage par :
i) l'application d'au moins un deuxième sirop de sucre-alcool présentant une viscosité au rhéomètre comprise entre 20mPa.s et 50mPa.s, et/ou une matière sèche comprise entre 50 et 70% (masse/masse) ;
ii) l'application de la première et/ou de la seconde composition pulvérulente de sucre-alcool ;
iii) optionnellement, les étapes d.i) et d.ii) répétées au moins une fois ;
e. optionnellement, une étape de polissage et/ou d'application d'agent de brillance ;
f. optionnellement, une étape d'application d'un agent de scellage.

2. Méthode selon la revendication **1 caractérisée en ce que** le premier et/ou le second sirop de sucre-alcool est un sirop de polyglycitols ou un sirop d'hydrolysat d'amidon hydrogéné ou un sirop de maltitol, de sorbitol, de xylitol, d'érythritol ou de mannitol.

3. Méthode selon la revendication **1 caractérisée en ce que** le premier et/ou le second sirop de sucre-alcool est un sirop de maltitol comprenant plus de 50% de maltitol, moins de 8% de sorbitol et moins de 45%de DP3+ hydrogénés.

4. Méthode selon l'une quelconque des revendications précédentes **caractérisée en ce que** le premier sirop de sucre-alcool présente une viscosité à 60°C au rhéomètre comprise entre 120mPa.s et1600mPa.s.

5. Méthode selon l'une quelconque des revendications précédentes **caractérisée en ce que** le premier sirop de sucre-alcool peut être obtenu par hydrogénation d'un sirop de glucose ayant un dextrose équivalent compris entre 38 et 60.

6. Méthode selon l'une quelconque des revendications précédentes **caractérisée en ce que** la première composition pulvérulente de sucre-alcool présente une granulométrie moyenne comprise entre 180-600µm et/ou la seconde composition pulvérulente de sucre-alcool présente une granulométrie moyenne comprise entre de 25 et 60µm.

7. Méthode selon l'une quelconque des revendications précédentes **caractérisée en ce que** la première et/ou la seconde composition pulvérulente de sucre-alcool est une composition pulvérulente de maltitol, de mannitol, de sorbitol, d'érythritol, d'isomalt, de polyglycitol, d'hydrolysat d'amidon hydrogéné ou d'un mélange de ceux-ci.

8. Méthode selon l'une quelconque des revendications précédentes **caractérisée en ce que** lorsque le premier sirop de sucre-alcool est un sirop de maltitol, la première et/ou la seconde composition pulvérulente de sucre-alcool est choisie parmi le sorbitol, le maltitol, l'érythritol ou leurs mélanges.

9. Confiserie directement obtenue selon la méthode selon l'une quelconque des revendications précédentes **caractérisée en ce que** l'enrobage est tendre et sans sucres.

10. Confiserie selon la revendication **9 caractérisée en ce que** le centre est choisi parmi les gommes, les chocolats, et les centres comprenant de la gélatine et/ou de la réglisse.

## Patentansprüche

1. Verfahren zur weichen Umhüllung eines Konfektzentrums, umfassend:
a. bereitstellen eines Konfektkerns;
b. optional einen Gummierungsschritt;
c. einen Umhüllungsschritt durch:
i. Aufbringen mindestens eines ersten Zucker-Alkohol-Sirups, der eine Viskosität bei 60 °C gemäß einem Rheometer, die zwischen 1600 mPa.s und 120 mPa.s liegt, und/oder eine Trockensubstanz, die zwischen 70 und 87 % (Masse/Masse) liegt, aufweist;
ii. Aufbringen einer ersten pulverförmigen Zucker-Alkohol-Zusammensetzung, die eine durchschnittliche Teilchengröße D(0,5) von weniger als 600 µm umfasst;
iii. Aufbringen einer zweiten pulverförmigen Zucker-Alkohol-Zusammensetzung, die eine durchschnittliche Teilchengröße D(0,5) von weniger als 500 µm umfasst;
iv. wobei die Schritte c.i), c.ii) und/oder c.iii) vorzugsweise mindestens vier aufeinander folgende Male wiederholt werden;
d. einen Schritt eines Abschlusses der Umhüllung durch:
i) Aufbringen mindestens eines zweiten Zucker-Alkohol-Sirups, der eine Viskosität gemäß einem Rheometer, die zwischen 20 mPa.s und 50 mPa.s liegt, und/oder eine Trockensubstanz, die zwischen 50 und 70 % (Masse/Masse) liegt, aufweist;
ii) Aufbringen der ersten und/oder der zweiten pulverförmigen Zucker-Alkohol-Zusammensetzung;
iii) wobei optional die Schritte d.i) und d.ii) mindestens einmal wiederholt werden;
e. optional einen Schritt eines Polierens und/oder eines Aufbringens eines Glanzmittels;
f. optional einen Schritt eines Aufbringens eines Versiegelungsmittels.

2. Verfahren nach Anspruch **1, dadurch gekennzeichnet, dass** es sich bei dem ersten und/oder dem zweiten Zucker-Alkohol-Sirup um einen Sirup von Polyglycitolen oder einen Sirup von einem hydrierten Stärkehydrolysat oder einem Sirup von Maltit, Sorbit, Xylit, Erythrit oder Mannit handelt.

3. Verfahren nach Anspruch **1, dadurch gekennzeichnet, dass** es sich bei dem ersten und/oder dem zweiten Zucker-Alkohol-Sirup um einen Sirup von Maltit handelt, der mehr als 50 % Maltit, weniger als 8 % Sorbit und weniger als 45 % DP3 + Wasserstoffe umfasst.

4. Verfahren nach einem der vorhergehenden Ansprüche, **dadurch gekennzeichnet, dass** der erste Zucker-Alkohol-Sirup eine Viskosität bei 60 °C gemäß einem Rheometer, die zwischen 120 mPa.s und 1600 mPa.s liegt, aufweist.

5. Verfahren nach einem der vorhergehenden Ansprüche, **dadurch gekennzeichnet, dass** der erste Zucker-Alkohol-Sirup durch Hydrierung eines Sirups von Glukose mit einem Dextrose-Äquivalent, das zwischen 38 und 60 liegt, erhalten werden kann.

6. Verfahren nach einem der vorhergehenden Ansprüche, **dadurch gekennzeichnet, dass** die erste pulverförmige Zucker-Alkohol-Zusammensetzung eine durchschnittliche Teilchengröße aufweist, die zwischen 180 und 600 µm liegt, und/oder die zweite pulverförmige Zucker-Alkohol-Zusammensetzung eine durchschnittliche Teilchengröße aufweist, die zwischen 25 und 60 µm liegt.

7. Verfahren nach einem der vorhergehenden Ansprüche, **dadurch gekennzeichnet, dass** es sich bei der ersten und/oder der zweiten pulverförmigen Zucker-Alkohol-Zusammensetzung um eine pulverförmige Zusammensetzung von Maltit, Mannit, Sorbit, Erythrit, Isomalt, Polyglycitol, hydriertem Stärkehydrolysat oder einem Gemisch dieser handelt.

8. Verfahren nach einem der vorhergehenden Ansprüche, **dadurch gekennzeichnet, dass**, wenn der erste Zucker-Alkohol-Sirup ein Sirup von Maltit ist, die erste und/oder die zweite pulverförmige Zucker-Alkohol-Zusammensetzung aus Sorbit, Maltit, Erythrit oder deren Gemischen ausgewählt sind.

9. Konfekt, das direkt gemäß dem Verfahren nach einem der vorhergehenden Ansprüche erhalten wird, **dadurch gekennzeichnet, dass** die Umhüllung weich und zuckerfrei ist.

10. Konfekt nach Anspruch **9, dadurch gekennzeichnet, dass** das Zentrum aus Gummen, Schokoladen, und Zentren Gelatine und/oder Lakritze umfassen, ausgewählt ist.

## Claims

1. Method of soft coating for a confectionery centre comprising:
a. the provision of a confectionery core;
b. optionally, a gumming step;
c. a coating step by:
i. applying at least a first sugar-alcohol syrup having a rheometer viscosity at 60°C between 1600 mPa.s and 120 mPa.s, and/or a dry matter between 70 and 87% (mass/mass);
ii. applying a first pulverulent sugar-alcohol composition comprising an average particle size D(0.5) of less than 600 µm;
iii. applying a second pulverulent sugar-alcohol composition comprising an average particle size D(0.5) of less than 500 µm;
iv. steps c.i), c.ii) and/or c.iii) are repeated, preferably at least four consecutive times;
d. a step of finishing the coating by:
i) applying at least a second sugar-alcohol syrup having a rheometer viscosity between 20mPa.s and 50mPa.s, and/or a dry matter of between 50 and 70% (mass/mass);
ii) applying the first and/or the second pulverulent composition of sugar-alcohol;
iii) optionally, steps d.i) and d.ii) repeated at least once;
e. optionally, a step of polishing and/or applying a shine agent;
f. optionally, a step of applying a sealing agent.

2. Method according to claim **1 characterized in that** the first and/or the second sugar-alcohol syrup is a polyglycitol syrup or a hydrogenated starch hydrolysate syrup or a syrup of maltitol, sorbitol, xylitol, erythritol or mannitol.

3. Method according to claim **1 characterized in that** the first and/or the second sugar-alcohol syrup is a maltitol syrup comprising more than 50% maltitol, less than 8% sorbitol and less than 45% hydrogenated DP3+.

4. Method according to any one of the preceding claims, **characterized in that** the first sugar-alcohol syrup has a rheometer viscosity at 60°C between 120mPa.s and 1600mPa.s.

5. Method according to any one of the preceding claims, **characterized in that** the first sugar-alcohol syrup can be obtained by hydrogenation of a glucose syrup having a dextrose equivalent of between 38 and 60.

6. Method according to any one of the preceding claims, **characterized in that** the first pulverulent sugar-alcohol composition has an average particle size of between 180 and 600 µm and/or the second pulverulent sugar-alcohol composition has an average particle size between 25 and 60µm.

7. Method according to any one of the preceding claims, **characterized in that** the first and/or the second pulverulent sugar-alcohol composition is a pulverulent composition of maltitol, mannitol, sorbitol, erythritol, isomalt, polyglycitol, hydrogenated starch hydrolysate or a mixture thereof.

8. Method according to any one of the preceding claims, **characterized in that** when the first sugar-alcohol syrup is a maltitol syrup, the first and/or the second pulverulent composition of sugar-alcohol is chosen from sorbitol, maltitol, erythritol or mixtures thereof.

9. Confectionery directly obtained from to the method according to any one of the preceding claims, **characterized in that** the coating is soft and sugar-free.

10. Confectionery according to claim **9, characterized in that** the centre is chosen from gums, chocolates, and centers comprising gelatine and/or liquorice.
